(19) Europäisches Patentamt / European Patent Office / Office européen des brevets

(11) **EP 3 198 973 B1**

(12) **EUROPEAN PATENT SPECIFICATION**

(45) Date of publication and mention of the grant of the patent:
**05.06.2019 Bulletin 2019/23**

(51) Int Cl.:
**H04W 72/12** *(2009.01)* **H04W 74/08** *(2009.01)*

(21) Application number: **14772330.8**

(22) Date of filing: **24.09.2014**

(86) International application number:
**PCT/EP2014/070299**

(87) International publication number:
**WO 2016/045715 (31.03.2016 Gazette 2016/13)**

(54) **REPEATED TRANSMISSION OF SCHEDULING ASSIGNMENT FOR RANDOM ACCESS RESPONSE**

WIEDERHOLTE ÜBERTRAGUNG EINER EINPLANUNGSZUWEISUNG FÜR ZUFALLSZUGRIFFSANTWORT

TRANSMISSION RÉPÉTÉE D'ATTRIBUTION DE PLANIFICATION POUR RÉPONSE D'ACCÈS ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2017 Bulletin 2017/31**

(73) Proprietor: **Nokia Solutions and Networks Oy 02610 Espoo (FI)**

(72) Inventors:
- **ZHANG, Yan Ji Beijing 100029 (CN)**
- **RATASUK, Rapeepat Hoffman Estates, IL 60192 (US)**

(74) Representative: **Style, Kelda Camilla Karen et al Page White & Farrer Bedford House John Street London, WC1N 2BF (GB)**

(56) References cited:
**WO-A1-2013/115691**

- **ALCATEL-LUCENT ET AL: "Coverage enhancement for RACH", 3GPP DRAFT; R2-140726 - RACH MESSAGES V0.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 9 February 2014 (2014-02-09), XP050792016, Retrieved from the Internet: URL:http://www.3gpp.org/ftp/Meetings_3GPP_ SYNC/RAN2/Docs/ [retrieved on 2014-02-09]**
- **ALCATEL-LUCENT ET AL: "Coverage enhancement for RACH messages", 3GPP DRAFT; R1-140153 - REL-12 MTC - CE FOR RACH MESSAGES V0.2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 31 January 2014 (2014-01-31), XP050751605, Retrieved from the Internet: URL:http://www.3gpp.org/ftp/tsg_ran/WG1_RL 1/TSGR1_76/Docs/ [retrieved on 2014-01-31]**

## Description

One technique proposed for enhancing the coverage of a radio communication device involves repeating the transmission of scheduling assignments for random access response messages, and allowing the use of the same set of radio resources for more than one scheduling assignment.

ALCATEL-LUCENT ET AL "Coverage enhancement for RACH" R12-140726, discusses some aspect of a random access channel (RACH) process.

The inventors for the present application have identified the challenge of developing new techniques to avoid or alleviate problems that can arise from repeating the transmission of scheduling assignments for random access response messages.

The invention relates to methods, apparatuses and computer program products as set forth in the claims.

Hereunder is provided, by way of example only, a detailed description of techniques related to the repeated transmission of scheduling assignments for random access response message, with reference to the accompanying drawings, in which:

Figure 1 illustrates an example of communication devices in communication with an access node of a radio access network;

Figure 2 illustrates some components of one example of user equipment as shown in figure 1;

Figure 3 illustrates some components of an example of an apparatus suitable for the access nodes shown in figure 1;

Figure 4 illustrates one example of a technique of reducing the risk of the same UE identifier being used for more than one scheduling assignments in the subframe;

Figures 5a and 5b illustrate an example of operations at an eNB and UE in the technique of Figure 4;

Figure 6 illustrates one example of a technique of controlling the size of the response window for starting the repeated transmission of scheduling assignment for random access response based on the repetition factor of the scheduling assignment transmission

Figures 7a and 7b illustrate an example of operations at an eNB and UE in the technique of Figure 6; and

Figure 8 illustrates another example of operations at an eNB and UE.

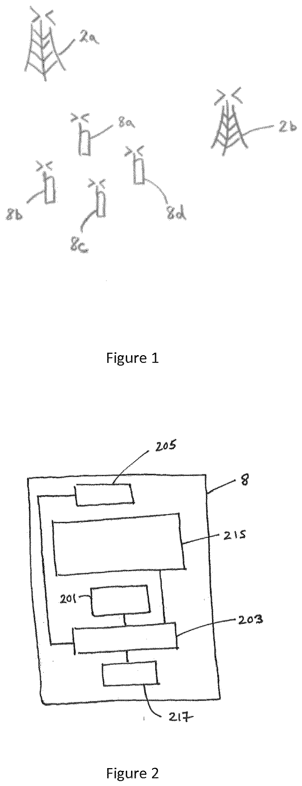

Figure 1 illustrates an example of a group of communication devices (UE) 8 within the coverage area of at least one access node (e.g. eNodeB) 2 of a radio access network. Figure 1 only shows two access nodes 2, but a radio access network will typically comprise a large number of access nodes collectively covering a wide, continuous coverage area.

Figure 2 shows a schematic view of an example of user equipment 8 that may be used for communicating with at least the eNBs 2 of Figure 1 via a wireless interface. The user equipment (UE) 8 may be used for various tasks such as making and receiving phone calls, for receiving and sending data from and to a data network and for experiencing, for example, multimedia or other content.

The UE 8 may be any device capable of at least sending or receiving radio signals to or from at least the eNBs 2 of Figure 1. Non-limiting examples include a mobile station (MS), a portable computer provided with a wireless interface card or other wireless interface facility, personal data assistant (PDA) provided with wireless communication capabilities, or any combinations of these or the like. The UE 8 may communicate via an appropriate radio interface arrangement of the UE 8. The interface arrangement may be provided for example by means of a radio part and associated antenna arrangement 205. The antenna arrangement may be arranged internally or externally to the UE 8, and may include a plurality of antennas capable of operating in a multi-layer transmission scheme.

The UE 8 may be provided with at least one data processing entity 203 and at least one memory or data storage entity 217 for use in tasks it is designed to perform. The data processor 213 and memory 217 may be provided on an appropriate circuit board 219 and/or in chipsets.

The user may control the operation of the UE 8 by means of a suitable user interface such as key pad 201, voice commands, touch sensitive screen or pad, combinations thereof or the like. A display 215, a speaker and a microphone may also be provided. Furthermore, the UE 8 may comprise appropriate connectors (either wired or wireless) to other devices and/or for connecting external accessories, for example hands-free equipment, thereto.

Figure 2 shows an example of a UE including a user interface, but the UE may also be a communication device without any user interface, such as a device that is designed for machine type communications (MTC).

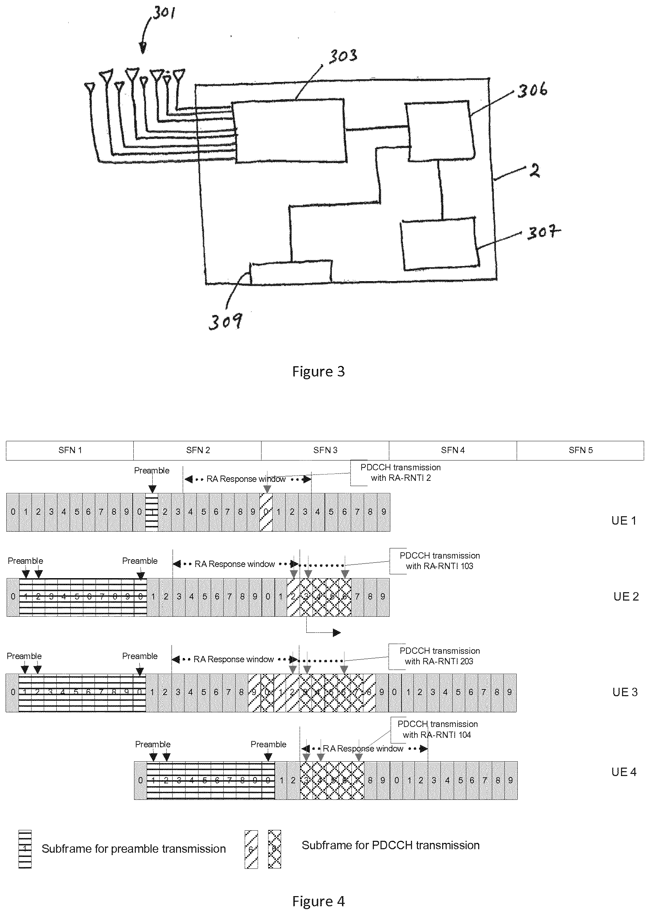

Figure 3 shows an example of apparatus for use at the network transceiving entities 2 of Figure 1 The apparatus comprises a radio frequency antenna array 301 configured to receive and transmit radio frequency signals; radio frequency interface circuitry 303 configured to interface the radio frequency signals received and transmitted by the antenna array 301 and the data processor 306. The radio frequency interface circuitry 303 may also be known as a transceiver. The apparatus also comprises an interface 309 via which it can send and receive information to and from one or more other network nodes such as other eNBs 2. The data processor 306 is configured to process signals from the radio frequency interface circuitry 303, control the radio frequency interface circuitry 303 to generate suitable RF signals to communicate information to the UE 8 via the wireless communications link, and also to exchange information with other network nodes via the interface 309. The memory 307 is used for storing data, parameters and instructions for use by the data processor 306.

It would be appreciated that the apparatus shown in each of figures 2 and 3 described above may comprise further elements which are not directly involved with the embodiments of the invention described hereafter.

In order to achieve uplink synchronisation or make a request for radio resources for uplink transmissions, a UE 8 may initiate a random access (RA) procedure by transmitting a preamble signal via a physical random access channel (PRACH) and then searching in a response window (search space in time) on a physical downlink control channel (PDCCH) for a scheduling assignment for the random access response message addressed by an identifier (e.g. random access radio network temporary identifier (RA-RNTI)) expected by the UE 8. The response window may comprise a predetermined number of (e.g. contiguous) sub-frames starting with the sub-frame that comes immediately after a predetermined number of sub-frames (e.g. three sub-frames) after the sub-frame containing the end of the preamble transmission.

One current proposal is for some UEs (such as e.g. devices that are mainly or exclusively involved in machine type communications (MTC), and which may have relatively low-cost chipsets with relatively low signal processing power and require coverage extensions) to repeat the transmission of the preamble signal over multiple subframes, and for the eNB to respond to the preamble signal with the repeated transmission of scheduling assignment (e.g. PDCCH or EPDCCH) for the random access response message over multiple (e.g. contiguous) subframes beginning somewhere in a predetermined response window.

This repeated PDCCH transmission for scheduling the random access response leads to a risk of the same set of subframes being used for PDCCH transmissions to schedule two or more random access responses. For example, even for preamble signals first transmitted in respective, consecutive system frames, the repeated transmission of the PDCCH to schedule the first random access response beginning at the end of the response window for the preamble signal of the earlier system frame may overlap with the transmission (repeated or otherwise) of a PDCCH for scheduling another random access response at the start of the response window for the preamble signal of the later system frame. Furthermore, when, as specified in the current version of 3GPP TS 36.321, the RA-RNTI is calculated by the formula RA-RNTI = 1 + t_id +10*f_id (where t_id is the index of the first subframe at which the preamble signal is transmitted by the UE, and f_id is the index of the specified PRACH within that sub-frame, in ascending order of frequency domain), then in the case of frequency division duplex systems (for which f_id = 0), there is a significantly increased risk of the same RA-RNTI being used for two or more PDCCH scheduling assignments for scheduling the random access response started within a response window (search space). The UE may therefore detect more than one valid PDCCH RAR scheduling assignments identified by the RA-RNTI that it is searching for, including one or more PDCCH RAR scheduling assignments transmitted by the eNB in response to preamble signals from other UEs. The UE would waste power and processing in: (a) decoding the PDCCH not in fact intended for that UE and (b) detecting and decoding signals on PDSCH resources identified in the PDCCH not intended for that UE. Moreover, UEs with relatively low processing power might not have the capability to detect and decode PDSCH signals for all random response messages that it detects with the RA-RNTI that it is expecting, because of a restriction on the maximum number of received physical resource blocks (PRBs).

One example of a technique for reducing the risk of wasted signal processing at a UE involves adopting a different formula for calculating the RA-RNTI for a UE designated for repeated PDCCH RAR scheduling assignment transmission as part of a coverage enhancement (CE) scheme (which UEs are hereafter referred to as CE UEs), according to which the RA-RNTI value for the random access procedure for a CE UE additionally depends on the system frame number at which the preamble signal is first transmitted, and/or the repetition factor assigned to the CE UE.

For example, a plurality of predetermined coverage enhancement (CE) levels may be permitted for the eNB cell via which the UE transmits the preamble signal, each coverage enhancement level associated with a different RAR scheduling assignment repetition factor. For example a CE Level 1 may specify repeating the PDCCH RAR scheduling assignment over a set of 5 contiguous sub-frames beginning at one subframe within the response window; and CE Level 2 may specify repeating the PDCCH RAR scheduling assignment for random access response over a set of 10 contiguous sub-frames beginning at one subframe within the response window. The formula for calculating the RA-RNTI for a CE UE may, for example, be as follows:

$$RA\text{-}RNTI = 1 + t\_id + 10*f\_id + 100*CE\_level + SFN$$

The formula for calculating the RA-RNTI for a non-CE UE may, for example, remain as:

$$RA\text{-}RNTI = 1 + t\_id + f\_id$$

wherein; t_id and f_id are as mentioned above; CE level is the coverage enhancement level assigned to the UE; and SFN is the index of the system frame in which the UE first transmits the preamble signal.

Figure 4 illustrates an example of the timings of the PDCCH RAR scheduling assignment transmissions for four UEs. According to the formula above: the RA-RNTI for non-CE UE 1 would be 2; the RA-RNTI for UE 2 (CE level = 1) would be 103; the RA-RNTI level for UE3 (CE level = 2) would be 203; and the RA-RNTI for UE4 (CE level = 1) would be 104. Under the RA-RNTI formula specified in the current version of 3GPP TS36.321, the RA-RNTI for all of UE2, UE3 and UE4 (in a FDD system) would be the same as that of UE1; and all of the four UEs would detect starting from their respective random access response windows single or repeated PDCCH RAR scheduling assignment transmissions identified by the same RA-RNTI that they are all each searching for. Moreover, there are more than one PDCCH RAR scheduling assignment transmissions identified by the same RA-RNTI in the same one or more sub-frames, e.g. sub-frame#0 of SFN#3 (UE1 and UE3), sub-frames#3 to 6 of SFN#3 (all of UE2, UE3 and UE4), and sub-frame#7 of SFN#3 (UE3 and UE4).

The above example of a formula for calculating the RA-RNTI for a CE UE uses the CE level index as one variable, but the same kind of result can be achieved by using e.g. a random access configuration index (as specified in e.g. System Information Block Type 2), or the actual repetition factor itself.

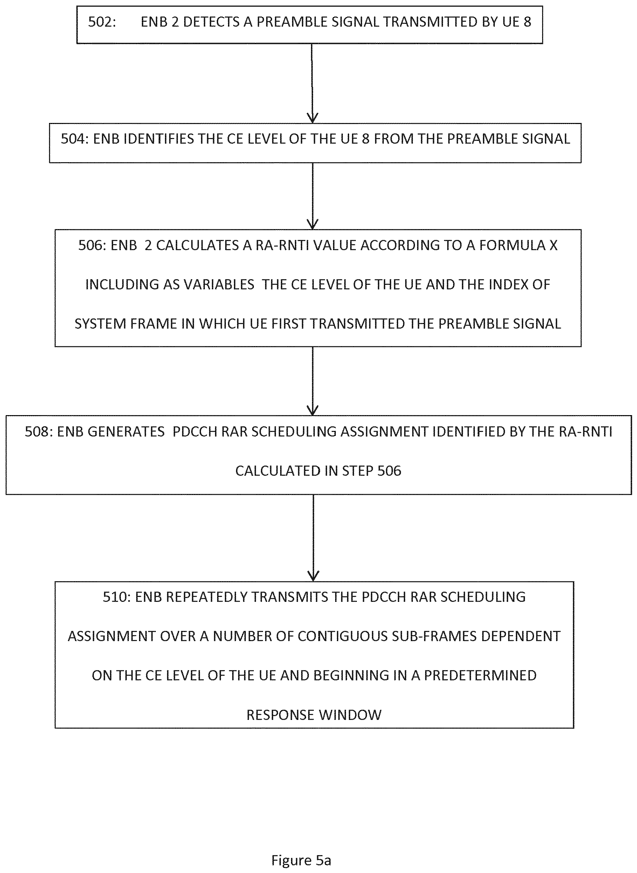

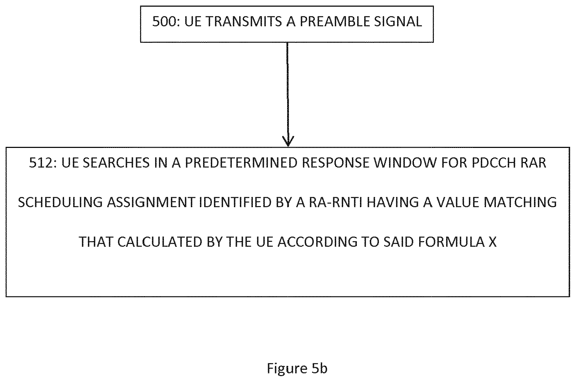

Figure 5 illustrates an example of a set of operations at the eNB 2. The UE 8 transmits a preamble signal (STEP 500). The eNB 2 detects the preamble signal (STEP 502). The eNB 2 identifies the CE level of the UE from the preamble signal (STEP 504). For example, UEs may be configured to use different PRACH formats for different CE levels, and the eNB 2 can identify the CE level of the UE from the PRACH format used for the preamble signal. The eNB 2 calculates a RA-RNTI value using the formula given above (STEP 506). The eNB 2 generates the PDCCH RAR scheduling assignment for the random access response (STEP 508). The eNB 2 then starts transmission of PDCCH RAR scheduling assignment identified by the calculated RA-RNTI at a sub-frame within the predetermined response window known to the UE 8, and repeats transmission of PDCCH RAR scheduling assignment over the number of contiguous subframes specified for the CE level of the UE (STEP 510). The UE 8 also calculates the RA-RNTI according to the formula given above in the same way as the eNB 2, and searches in the predetermined response window for the PDCCH RAR scheduling assignment identified by the RA-RNTI that the UE 8 has calculated (STEP 512).

On the other hand, if the preamble signal indicates that the UE is a non CE UE, the eNB proceeds according to the conventional method using the conventional formula for calculating a RA-RNTI value and without repeated transmission of the PDCCH RAR scheduling assignment.

Another example of a technique for reducing the risk of wasted signal processing at a UE involves pre-assigning a respective RA-RNTI value to each possible combination of CE level and preamble SFI (index of the system frame in which the UE first transmits the preamble signal). The information about which RA-RNTI values are pre-assigned to which combinations of CE level and SFI may be fixed information stored in the UEs, or may be dynamically configured information provided to UEs by the radio access network as part of e.g. the System Information Block. The eNB 2 identifies the CE level of the UE from the preamble signal, and looks up the RA-RNTI value pre-assigned to the combination of that CE level and the index of the system frame in which the eNB first detected the preamble signal. The eNB applies the RA-RNTI value as part of the scheduling assignment for the random access response message sent over the PDSCH, and the UE searches for the PDCCH scheduling assignment addressed by this RA-RNTI for a potential random access response.

Another example of a technique for reducing the risk of wasted signal processing involves controlling the size of the response window in dependence on the size of the repetition factor for the PDCCH transmission used for scheduling the random access response message. One example of a rule relating to the size of the response window is given below, in which N = 2 for the case where the UE is limited to beginning the transmission of preamble signals in system frames having even indices (e.g. when the "PRACH Configuration Index" in Table 5.7.1-2 of 3GPP TS36.211 is one for which the "System Frame Number" is "Even"), and N = 1 for UEs without such limitation (e.g. when the "PRACH Configuration Index" in Table 5.7.1-2 of 3GPP TS36.211 is one for which the "System Frame Number" is "Any").

Ra-ResponseWindowSize < 10*N + repetition number of PDCCH RAR scheduling assignment

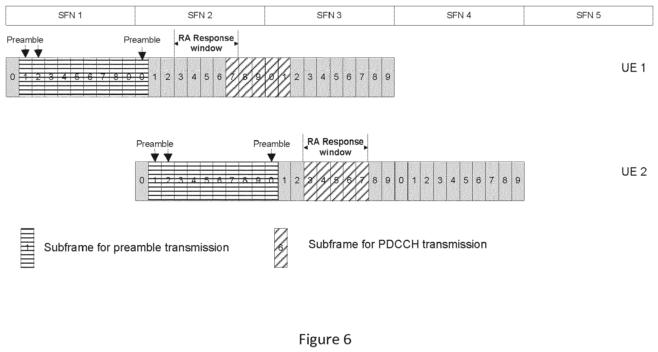

Figure 6 illustrates the example of two UEs beginning the transmission of preamble signals at the same sub-frame index of different system frames. Both UEs have the same coverage enhancement level specifying a repetition factor of 5, and the "PRACH Configuration Index" in Table 5.7.1-2 of 3GPP TS36.211 is set to 3 ("System Frame Number" = "Even") for both UE1 and UE2.

Based on the above equation, the ra-ResponseWindowSize could, for example, be set to 5 for both UE1 and UE2. For example, the eNB could decide on respective ra-Response window sizes meeting the above equation for each CE level, and include this information in the transmitted system information accessible by all UEs within coverage of the eNB. As mentioned above, the response window may comprise a predetermined number of contiguous sub-frames starting with the sub-frame that comes immediately after a predetermined number of sub-frames after the sub-frame containing the end of the preamble transmission. The RA response window for UE1 occupies subframe#3 to subframe#7 of systemframe#2, and the RA response window for UE2 occupies subframe#3 to subframe#7 of systemframe#3. Even if the transmission of the PDCCH RAR scheduling assignment for UE1 is begun at the last sub-frame of the response window for UE1, and the transmission of the PDCCH RAR scheduling assignment for UE2 is begin at the first sub-frame of the response window for UE2, there would be no sub-frame commonly used for the PDCCH RAR scheduling assignments for both UEs. According to one variation of this technique, this restriction on the response window size is only applied if the repetition number is less than 2*N-2, where N is defined as above.

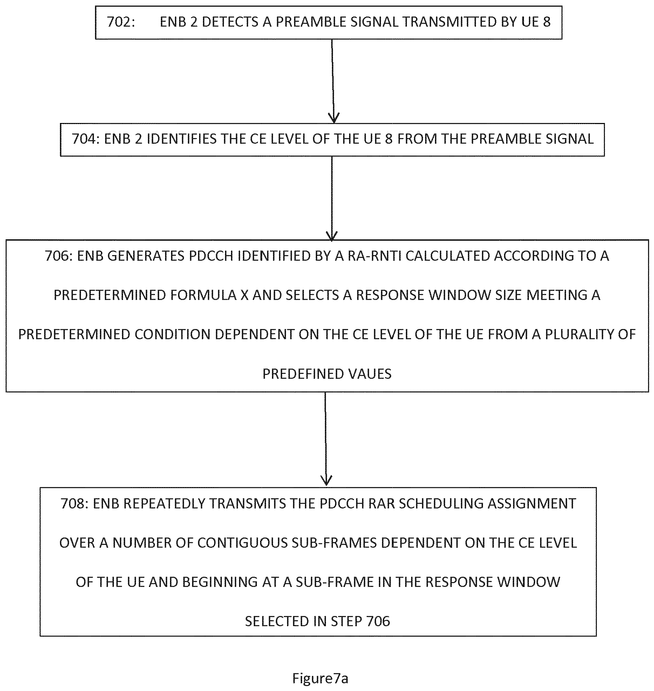

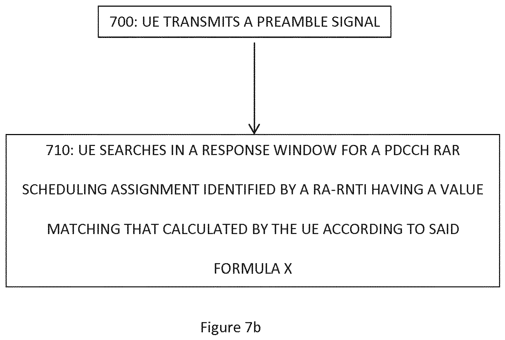

One example of a set of operations at the eNB 2 is illustrated in Figure 7. eNB 2 broadcasts system information about mapping of the response window size to different repetition factors, which system information is accessible by UE 8. UE 8 transmits a preamble signal repeatedly over a contiguous set of sub-frames (STEP 700). eNB 2 detects the preamble signal (STEP 702). The eNB 2 identifies the CE level of the UE from the preamble signal (STEP 704). The eNB 2 then generates the PDCCH scheduling assignment for the random access response and calculate the RA-RNTI value according to a conventional method or using one of the methods described above, and selects a size for the response window meeting the condition described above from the predefined values based on the repetition factor of the UE (STEP 706). The eNB 2 starts transmission of the PDCCH RAR scheduling assignment at a sub-frame within the response window of the selected size, and repeats transmission of the PDCCH RAR scheduling assignment over the number of contiguous subframes corresponding to the CE level for the UE (STEP 708). The UE 8 also identifies from the system information broadcast by the eNB which response window size is being used by the eNB for the CE level assigned to the UE, and calculates the RA-RNTI value in the same way as the eNB 2. The UE searches throughout the identified response window for a PDCCH RAR scheduling assignment identified by the RA-RNTI value that the UE has calculated (STEP 710).

On the other hand, if the preamble signal indicates that the UE is a non CE UE, the eNB 2 proceeds according to the conventional method using the predetermined regular response window size.

Another example of a technique for reducing the risk of wasted signal processing involves pre-defining different search spaces within a response window for different combination of CE level and preamble SFI (and/or other parameters that reduce the risk of one or more sub-frames being commonly used for two or more random access response). Even if a UE detects two different PDCCH RAR scheduling assignments having the expected RA-RNTI within the response window for the UE, this will not cause a decoding error if only the RAR scheduling assignment intended for the UE is within the limited search space for the relevant combination of UE CE level and preamble SFI.

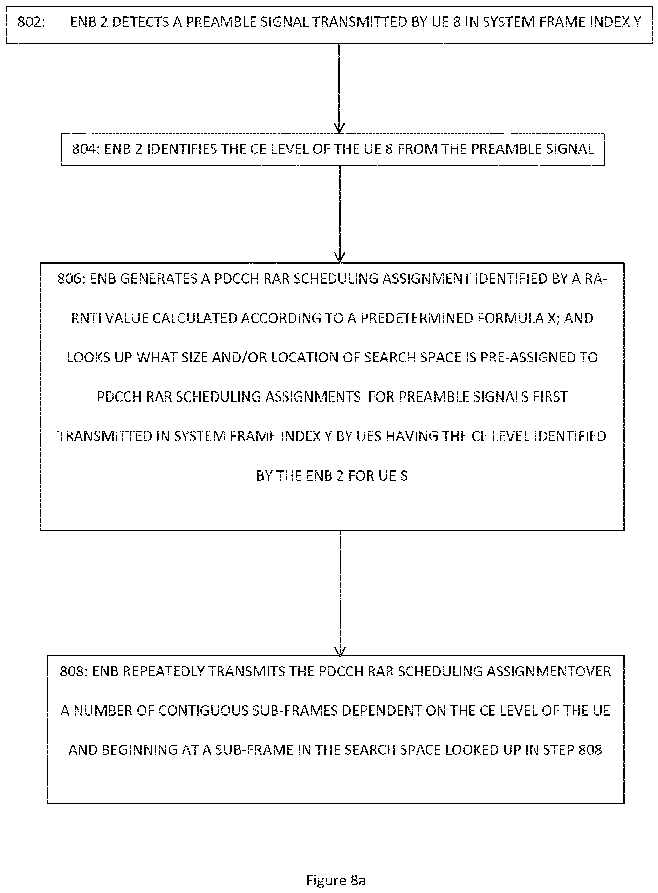

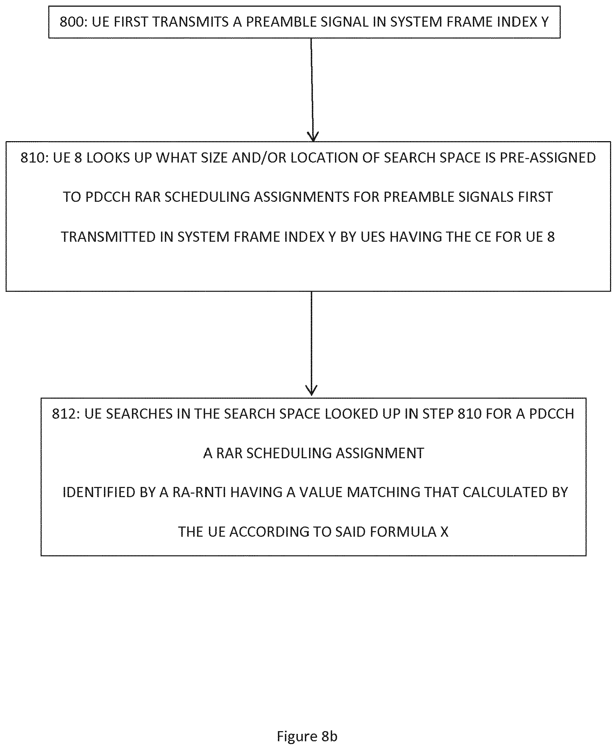

One example of a set of operations at the UE and eNB 2 is illustrated in Figure 8. The UE 8 repeatedly transmits a preamble signal over a contiguous number of subframes corresponding to the CE level for the UE (STEP 800). The eNB 2 detects the preamble signal (STEP 802). The eNB 2 identifies the CE level of the UE from the preamble signal (STEP 804). The eNB 2 then generates PDCCH containing the scheduling assignment for the random access response message, calculates the RA-RNTI value according to a conventional method or using one of the methods described above, and looks up from a look-up table what size and location of search space has been pre-assigned to the combination of (i) the system frame index in which the preamble signal was first detected, and (ii) the CE level identified by the eNB 2 for the UE from the preamble signal (STEP 806). The eNB 2 starts transmission of the PDCCH RAR scheduling assignment identified by the calculated RA-RNTI at a sub-frame within the pre-assigned search space, and repeats transmission of the PDCCH RAR scheduling assignment over the number of contiguous subframes corresponding to the CE level for the UE (STEP 808). The UE 8 also looks up the search space in the same way as the eNB 2, and calculates a RA-RNTI value in the same way as the eNB 2 (STEP 810). The UE searches throughout the pre-assigned search space for a PDCCH RAR scheduling assignment identified by the RA-RNTI value that the UE has calculated (STEP 812).

On the other hand, if the preamble signal indicates that the UE is a non-CE UE, the eNB proceeds according to the conventional method, beginning the transmission of the PDCCH scheduling assignment for random access response somewhere in the predetermined regular search space (response window).

The above description relates to the example of using the physical downlink control channel (PDCCH) for transmitting RAR scheduling assignments, but the same techniques are equally applicable to the use of other channels for transmitting RAR scheduling assignments, such as e.g. other channels used for sending uplink/downlink scheduling assignments and/or transmission power control commands, such as e.g. enhanced PDCCH (ePDCCH).

The above-described operations may require data processing in the various entities. The data processing may be provided by means of one or more data processors. Similarly various entities described in the above embodiments may be implemented within a single or a plurality of data processing entities and/or data processors. Appropriately adapted computer program code product may be used for implementing the embodiments, when loaded to a computer. The program code product for providing the operation may be stored on and provided by means of a carrier medium such as a carrier disc, card or tape. A possibility is to download the program code product via a data network. Implementation may be provided with appropriate software in a server.

For example the embodiments of the invention may be implemented as a chipset, in other words a series of integrated circuits communicating among each other. The chipset may comprise microprocessors arranged to run code, application specific integrated circuits (ASICs), or programmable digital signal processors for performing the operations described above.

Embodiments of the invention may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

In addition to the modifications explicitly mentioned above, it will be evident to a person skilled in the art that various other modifications of the described embodiment may be made within the scope of the invention.

## Claims

1. A method, comprising:

   detecting (502) a preamble signal transmitted by a communication device (8); and
   transmitting (510) a scheduling assignment for a random access response message over a wireless interface;
   wherein the scheduling assignment is identified by an identifier having a value dependent at least partly on the index of a system frame in which the preamble signal was detected.

2. A method according to claim 1, wherein the preamble signal is transmitted in more than one system frame, and said identifier has a value dependent at least partly on the index of the system frame in which the preamble signal was first detected.

3. A method according to claim 1 or claim 2, comprising repeatedly transmitting (510) scheduling assignment over a number of subframes dependent on said feature of said communication device (8).

4. A method according to any of claims 1 to 3, wherein said feature of said communication device is a coverage enhancement level assigned to the communication device; and said identifier has a value derived from a formula including the assigned coverage enhancement level as one variable.

5. A method according to claim 4, wherein respective sets of possible values for said identifier are reserved for respective coverage enhancement levels; and wherein the method further comprises selecting a value for said identifier for said scheduling assignment from the set of possible values reserved for the coverage enhancement level assigned to said communication device (8).

6. A method according to any of claims 1 to 5, wherein said identifier is random access radio network temporary identifier.

7. A method, comprising:

   transmitting (500) a preamble signal from a communication device (8); and
   searching (512) for a random access response scheduling assignment identified by an identifier having a value dependent at least partly on the index of a system frame in which the preamble signal was transmitted.

8. A method according to claim 7, comprising transmitting (500) the preamble signal in more than one system frame, and wherein said identifier has a value dependent at least partly on the index of the system frame in which the preamble signal was first transmitted.

9. A method, comprising:

detecting (802) a preamble signal transmitted by a communication device (8);
generating (806) a random access response scheduling assignment in response to the preamble signal; and
starting (808) transmission of the scheduling assignment over a wireless interface at some time in a response window;
wherein the size and/or location of the response window is dependent at least partly on the index of a system frame at which the random access preamble signal was detected.

10. A method according to claim 9, wherein the preamble signal is transmitted in more than one system frame, and the size and/or location of the response window has a value dependent at least partly on the index of the system frame in which the preamble signal was first detected.

11. A method according to claim 9 or claim 10, comprising repeatedly transmitting the scheduling assignment in a number of contiguous subframes dependent on said feature of said communication device (8).

12. A method according to any of claims 9 to 11, wherein the size of the response window is dependent on whether or not said communication device is required to transmit the preamble signal in an even system frame number.

13. A method according to claim 9, wherein said feature of said communication device (8) is a coverage enhancement level assigned to the communication device (8); respective different parts of the response window are assigned to respective coverage enhancement levels; and wherein the method comprises starting transmission of the scheduling assignment in the part of the response window assigned to the coverage enhancement level assigned to said communication device.

14. An apparatus comprising means for performing method according to any of claims 1-6, or any of claims 7-8, or any of claims 9-13.

15. A computer program product comprising a computer-readable medium bearing computer program code embodied therein for use with a computer, the computer program code comprising code for performing the operations in the method of any of claims 1-6, or any of claims 7-8, or any of claims 9-13.

**Patentansprüche**

1. Verfahren, umfassend:

Detektieren (502) eines Präambelsignals, das durch eine Kommunikationseinrichtung (8) übertragen wird; und
Übertragen (510) einer Scheduling-Zuweisung für eine Direktzugriffantwortnachricht über eine Drahtlosschnittstelle;
wobei die Scheduling-Zuweisung durch eine Kennung mit einem Wert identifiziert wird, der zumindest teilweise vom Index eines Systemrahmens, in dem das Präambelsignal detektiert wurde, abhängt.

2. Verfahren nach Anspruch 1, wobei das Präambelsignal in mehr als einem Systemrahmen übertragen wird und die Kennung einen Wert aufweist, der zumindest teilweise vom Index des Systemrahmens, in dem das Präambelsignal zuerst detektiert wurde, abhängt.

3. Verfahren nach Anspruch 1 oder Anspruch 2, umfassend wiederholtes Übertragen (510) einer Scheduling-Zuweisung über eine Anzahl von Unterrahmen in Abhängigkeit von dem Merkmal der Kommunikationseinrichtung (8).

4. Verfahren nach einem der Ansprüche 1 bis 3, wobei das Merkmal der Kommunikationseinrichtung eine der Kommunikationseinrichtung zugewiesene Abdeckungsverbesserungsebene ist; und die Kennung einen Wert aufweist, der aus einer Formel einschließlich der zugewiesenen Abdeckungsverbesserungsebene als eine Variable hergeleitet wird.

5. Verfahren nach Anspruch 4, wobei jeweilige Mengen möglicher Werte für die Kennung für jeweilige Abdeckungsverbesserungsebenen reserviert sind; und wobei das Verfahren ferner Auswählen eines Werts für die Kennung für die Scheduling-Zuweisung aus der Menge möglicher Werte, die für die der Kommunikationseinrichtung (8) zugewiesene Abdeckungsverbesserungsebene reserviert ist, umfasst.

6. Verfahren nach einem der Ansprüche 1 bis 5, wobei die Kennung eine temporäre Direktzugriff-Funknetzkennung ist.

7. Verfahren, umfassend:

   Übertragen (500) eines Präambelsignals von einer Kommunikationseinrichtung (8); und
   Suchen (512) nach einer Direktzugriffsantwort-Scheduling-Zuweisung, die durch eine Kennung mit einem Wert identifiziert wird, der zumindest teilweise vom Index eines Systemrahmens, in dem das Präambelsignal übertragen wurde, abhängt.

8. Verfahren nach Anspruch 7, umfassend Übertragen (500) des Präambelsignals in mehr als einem Systemrahmen, und wobei die Kennung einen Wert aufweist, der zumindest teilweise vom Index des Systemrahmens, in dem das Präambelsignal zuerst übertragen wurde, abhängt.

9. Verfahren, umfassend:

   Detektieren (802) eines Präambelsignals, das durch eine Kommunikationseinrichtung (8) übertragen wird;
   Erzeugen (806) einer Direktzugriffsantwort-Scheduling-Zuweisung als Reaktion auf das Präambelsignal; und
   Starten (808) einer Übertragung der Scheduling-Zuweisung über eine Drahtlosschnittstelle zu irgendeiner Zeit in einem Antwortfenster;
   wobei die Größe und/oder der Ort des Antwortfensters zumindest teilweise vom Index eines Systemrahmens, bei dem das Direktzugriff-Präambelsignal detektiert wurde, abhängt.

10. Verfahren nach Anspruch 9, wobei das Präambelsignal in mehr als einem Systemrahmen übertragen wird und die Größe und/oder der Ort des Antwortfensters einen Wert aufweist, der zumindest teilweise vom Index des Systemrahmens, in dem das Präambelsignal zuerst detektiert wurde, abhängt.

11. Verfahren nach Anspruch 9 oder Anspruch 10, umfassend wiederholtes Übertragen der Scheduling-Zuweisung in einer Anzahl angrenzender Unterrahmen in Abhängigkeit vom Merkmal der Kommunikationseinrichtung (8).

12. Verfahren nach einem der Ansprüche 9 bis 11, wobei die Größe des Antwortfensters davon abhängt, ob von der Kommunikationseinrichtung gefordert wird oder nicht, das Präambelsignal in einer geraden Systemrahmennummer zu übertragen.

13. Verfahren nach Anspruch 9, wobei das Merkmal der Kommunikationseinrichtung (8) eine der Kommunikationseinrichtung (8) zugewiesene Abdeckungsverbesserungsebene ist; jeweilige unterschiedliche Teile des Antwortfensters jeweiligen Abdeckungsverbesserungsebenen zugewiesen sind; und wobei das Verfahren Starten einer Übertragung der Scheduling-Zuweisung in dem Teil des Antwortfensters, das der der Kommunikationseinrichtung zugewiesenen Abdeckungsverbesserungsebene zugewiesen ist, umfasst.

14. Vorrichtung, die Mittel zum Durchführen des Verfahrens nach einem der Ansprüche 1-6 oder einem der Ansprüche 7-8 oder einem der Ansprüche 9-13 umfasst.

15. Computerprogrammprodukt, das ein computerlesbares Medium umfasst, das einen darin umgesetzten Computerprogrammcode zur Verwendung mit einem Computer trägt, wobei der Computerprogrammcode Code zum Durchführen der Arbeitsabläufe in dem Verfahren nach einem der Ansprüche 1-6 oder einem der Ansprüche 7-8 oder einem der Ansprüche 9-13 umfasst.

**Revendications**

1. Procédé comprenant :

   la détection (502) d'un signal de préambule transmis par un dispositif de communication (8) ; et
   la transmission (510) d'une affectation de planification pour un message de réponse à accès aléatoire sur une interface sans fil ;

dans lequel l'affectation de planification est identifiée par un identifiant ayant une valeur dépendant au moins en partie de l'index d'une trame de système dans laquelle le signal de préambule a été détecté.

2. Procédé selon la revendication 1, dans lequel le signal de préambule est transmis dans plus d'une trame de système, et ledit identifiant a une valeur dépendant au moins en partie de l'indice de la trame de système dans laquelle le signal de préambule a été détecté pour la première fois.

3. Procédé selon la revendication 1 ou la revendication 2, comprenant la transmission répétée (510) d'une affectation de planification sur un certain nombre de sous-trames dépendant de ladite caractéristique dudit dispositif de communication (8).

4. Procédé selon l'une quelconque des revendications 1 à 3, dans lequel ladite caractéristique dudit dispositif de communication est un niveau d'amélioration de la couverture affecté au dispositif de communication ; et ledit identifiant a une valeur dérivée d'une formule incluant le niveau d'amélioration de la couverture affecté en tant que variable.

5. Procédé selon la revendication 4, dans lequel des ensembles respectifs de valeurs possibles pour ledit identificateur sont réservés pour des niveaux respectifs d'amélioration de la couverture ; et dans lequel le procédé comprend en outre la sélection d'une valeur pour ledit identifiant pour ladite affectation de planification parmi l'ensemble de valeurs possibles réservées pour le niveau d'amélioration de la couverture affecté audit dispositif de communication (8) .

6. Procédé selon l'une quelconque des revendications 1 à 5, dans lequel ledit identifiant est un identifiant temporaire de réseau radio à accès aléatoire.

7. Procédé comprenant :

la transmission (500) d'un signal de préambule à partir d'un dispositif de communication (8) ; et
la recherche (512) d'une affectation de planification de réponse à accès aléatoire identifiée par un identifiant ayant une valeur dépendant au moins en partie de l'index d'une trame de système dans laquelle le signal de préambule a été transmis.

8. Procédé selon la revendication 7, comprenant la transmission (500) du signal de préambule dans plus d'une trame de système, et dans lequel ledit identifiant a une valeur dépendant au moins en partie de l'index de la trame de système dans laquelle le signal de préambule a été transmis pour la première fois.

9. Procédé comprenant :

la détection (802) d'un signal de préambule transmis par un dispositif de communication (8) ;
la génération (806) d'une affectation de planification de réponse à accès aléatoire en réponse au signal de préambule ; et
la démarrage (808) de la transmission de l'affectation de planification sur une interface sans fil à un moment donné dans une fenêtre de réponse ;
dans lequel la taille et/ou l'emplacement de la fenêtre de réponse dépendent au moins en partie de l'index d'une trame de système dans laquelle le signal de préambule à accès aléatoire a été détecté.

10. Procédé selon la revendication 9, dans lequel le signal de préambule est transmis dans plus d'une trame de système, et la taille et/ou l'emplacement de la fenêtre de réponse a une valeur dépendant au moins en partie de l'index de la trame de système dans laquelle le signal de préambule a été détecté pour la première fois.

11. Procédé selon la revendication 9 ou la revendication 10, comprenant la transmission répétée de l'affectation de planification dans un certain nombre de sous-trames contiguës dépendant de ladite caractéristique dudit dispositif de communication (8).

12. Procédé selon l'une quelconque des revendications 9 à 11, dans lequel la taille de la fenêtre de réponse dépend du fait que ledit dispositif de communication doive ou non transmettre le signal de préambule dans une trame de système ayant un numéro pair.

13. Procédé selon la revendication 9, dans lequel ladite caractéristique dudit dispositif de communication (8) est un niveau d'amélioration de la couverture affecté au dispositif de communication (8) ; des parties respectives différentes de la fenêtre de réponse sont affectées à des niveaux respectifs d'amélioration de la couverture ; et dans lequel le procédé comprend le démarrage de la transmission de l'affectation de planification dans la partie de la fenêtre de réponse affectée au niveau d'amélioration de la couverture affecté audit dispositif de communication.

14. Appareil comprenant des moyens d'exécution du procédé selon l'une quelconque des revendications 1 à 6, ou l'une quelconque des revendications 7 et 8, ou l'une quelconque des revendications 9 à 13.

15. Progiciel informatique comprenant un support lisible par ordinateur contenant un code de programme informatique incorporé pour être utilisé avec un ordinateur, le code de programme informatique comprenant un code pour effectuer les opérations dans le procédé selon l'une quelconque des revendications 1 à 6, ou selon l'une quelconque des revendications 7 à 8, ou selon l'une quelconque des revendications 9 à 13.

EP 3 198 973 B1

Figure 1

Figure 2

11

Figure 3

Figure 4

502: ENB 2 DETECTS A PREAMBLE SIGNAL TRANSMITTED BY UE 8

504: ENB IDENTIFIES THE CE LEVEL OF THE UE 8 FROM THE PREAMBLE SIGNAL

506: ENB 2 CALCULATES A RA-RNTI VALUE ACCORDING TO A FORMULA X INCLUDING AS VARIABLES THE CE LEVEL OF THE UE AND THE INDEX OF SYSTEM FRAME IN WHICH UE FIRST TRANSMITTED THE PREAMBLE SIGNAL

508: ENB GENERATES PDCCH RAR SCHEDULING ASSIGNMENT IDENTIFIED BY THE RA-RNTI CALCULATED IN STEP 506

510: ENB REPEATEDLY TRANSMITS THE PDCCH RAR SCHEDULING ASSIGNMENT OVER A NUMBER OF CONTIGUOUS SUB-FRAMES DEPENDENT ON THE CE LEVEL OF THE UE AND BEGINNING IN A PREDETERMINED RESPONSE WINDOW

Figure 5a

500: UE TRANSMITS A PREAMBLE SIGNAL

512: UE SEARCHES IN A PREDETERMINED RESPONSE WINDOW FOR PDCCH RAR

SCHEDULING ASSIGNMENT IDENTIFIED BY A RA-RNTI HAVING A VALUE MATCHING

THAT CALCULATED BY THE UE ACCORDING TO SAID FORMULA X

Figure 5b

Figure 6

702:    ENB 2 DETECTS A PREAMBLE SIGNAL TRANSMITTED BY UE 8

704: ENB 2 IDENTIFIES THE CE LEVEL OF THE UE 8 FROM THE PREAMBLE SIGNAL

706: ENB GENERATES PDCCH IDENTIFIED BY A RA-RNTI CALCULATED ACCORDING TO A PREDETERMINED FORMULA X AND SELECTS A RESPONSE WINDOW SIZE MEETING A PREDETERMINED CONDITION DEPENDENT ON THE CE LEVEL OF THE UE FROM A PLURALITY OF PREDEFINED VAUES

708: ENB REPEATEDLY TRANSMITS THE PDCCH RAR SCHEDULING ASSIGNMENT OVER A NUMBER OF CONTIGUOUS SUB-FRAMES DEPENDENT ON THE CE LEVEL OF THE UE AND BEGINNING AT A SUB-FRAME IN THE RESPONSE WINDOW SELECTED IN STEP 706

Figure7a

700: UE TRANSMITS A PREAMBLE SIGNAL

710: UE SEARCHES IN A RESPONSE WINDOW FOR A PDCCH RAR

SCHEDULING ASSIGNMENT IDENTIFIED BY A RA-RNTI HAVING A VALUE

MATCHING THAT CALCULATED BY THE UE ACCORDING TO SAID

FORMULA X

Figure 7b

802: ENB 2 DETECTS A PREAMBLE SIGNAL TRANSMITTED BY UE 8 IN SYSTEM FRAME INDEX Y

804: ENB 2 IDENTIFIES THE CE LEVEL OF THE UE 8 FROM THE PREAMBLE SIGNAL

806: ENB GENERATES A PDCCH RAR SCHEDULING ASSIGNMENT IDENTIFIED BY A RA-RNTI VALUE CALCULATED ACCORDING TO A PREDETERMINED FORMULA X; AND LOOKS UP WHAT SIZE AND/OR LOCATION OF SEARCH SPACE IS PRE-ASSIGNED TO PDCCH RAR SCHEDULING ASSIGNMENTS FOR PREAMBLE SIGNALS FIRST TRANSMITTED IN SYSTEM FRAME INDEX Y BY UES HAVING THE CE LEVEL IDENTIFIED BY THE ENB 2 FOR UE 8

808: ENB REPEATEDLY TRANSMITS THE PDCCH RAR SCHEDULING ASSIGNMENTOVER A NUMBER OF CONTIGUOUS SUB-FRAMES DEPENDENT ON THE CE LEVEL OF THE UE AND BEGINNING AT A SUB-FRAME IN THE SEARCH SPACE LOOKED UP IN STEP 808

Figure 8a

800: UE FIRST TRANSMITS A PREAMBLE SIGNAL IN SYSTEM FRAME INDEX Y

810: UE 8 LOOKS UP WHAT SIZE AND/OR LOCATION OF SEARCH SPACE IS PRE-ASSIGNED

TO PDCCH RAR SCHEDULING ASSIGNMENTS FOR PREAMBLE SIGNALS FIRST

TRANSMITTED IN SYSTEM FRAME INDEX Y BY UES HAVING THE CE FOR UE 8

812: UE SEARCHES IN THE SEARCH SPACE LOOKED UP IN STEP 810 FOR A PDCCH

A RAR SCHEDULING ASSIGNMENT

IDENTIFIED BY A RA-RNTI HAVING A VALUE MATCHING THAT CALCULATED BY

THE UE ACCORDING TO SAID FORMULA X

Figure 8b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALCATEL-LUCENT et al.** Coverage enhancement for RACH. *R12-140726*